# EUROPEAN PATENT APPLICATION

(11) **EP 4 446 481 A1**
(43) Date of publication of application: **16.10.2024**
(21) Application number: 23192326.9
(22) Date of filing: 21.08.2023
(51) Int. Cl.: D01D 5/06, C09K 3/00, D01F 6/04, B01D 11/02, D01F 13/00

(54) **EXTRACTANT FOR ULTRA-HIGH MOLECULAR WEIGHT PE FIBERS AND MEMBRANES, AND METHODS OF PREPARING AND USING THE SAME**

(30) Priority: 12.04.2023 CN 202310388281
(71) Applicant: Zhejiang Lande Energy Technology Development Co., Ltd., Huzhou City Zhejiang Province (CN)
(72) Inventor: REN, Xuhua, Quzhou City (CN); Shen, Juefeng, Huzhou City (CN); Zhao, Hongchuan, Huanggang City (CN); Yao, Jinjie, Huzhou City (CN); Xiang, Taotao, Yuyao City (CN); Shen, Fangliang, Huzhou City (CN)
(74) Representative: Chung, Hoi Kan

(57) **Abstract**

Provided are an extractant for ultra-high molecular weight PE fibers and membranes, and methods of preparing and applying the same, relating to the technical field of polyethylene preparation. An extractant for ultra-high molecular weight PE fibers and membranes comprises an ionic liquid, which is one or more of an imidazolium tetrafluoroborate salt, a betaine salt, an imidazolium acetate salt, an imidazolium dicyanamide salt, an imidazolium ethyl sulfate salt, an imidazolium bis(fluorosulfonyl)imide salt and a bis((trifluoromethyl)sulfonyl)imide salt. The extractant of the present invention is characterized by a reasonable and scientific formula, high dispersibility and stability, a good degreasing effect on ultra-high molecular weight polyethylene fibers and membranes and excellent effects of subsequent separation and recycle of white oil, and has the advantages of convenient preparation of raw materials, simple process steps, low requirements for apparatuses, high operability, and suitable for industrial production.

## Description

### TECHNICAL FIELD

The present application relates to the technical filed of polyethylene preparation, specifically an extractant for ultra-high molecular weight PE fibers and membranes, and methods of preparing and using the same.

### BACKGROUND

Currently in China most of process routes for producing gel-spun high-strength and high-modulus polyethylene fibers mix paraffin oil, paraffin, or kerosene with an ultra-high molecular weight polyethylene powder to form a suspension. For conventional white oil extraction processes, manufacturing industrial parks are usually of a strong solvent smell; at the same time, the air in factory buildings is filled with certain solvent molecules, which would easily cause fires when exposed to high heat and open flames. Therefore, there is a need to substitute an extractant for solvents (paraffin, etc.) in products.

White oil extractants commonly used on the market are predominantly organic hydrocarbons. In most cases organic solvents, such as dichloromethane and tetrachloroethylene, are used as extractants. These extractants typically have high toxicity and flammable properties, and may generate VOC gases for long-term use, which irritate the human respiratory tract, that is, they have poor safety; and they have poor stability, resulting in a high loss rate. Moreover, the extraction of some PE membrane production lines in the prior art adopts a water seal tank, where a membrane is immersed in an extractant and a water seal layer is provided above the extractant, which effectively prevents the extractant from volatilization. However, when an oil film enters the water seal layer from the extraction layer, some oil stains will be brought into the water seal layer from the surface. If the oil stains are not handled in time, the surface quality of the membrane will be affected, and water stains will be formed. The volatilization of dichloromethane is endothermic, so that extraction transfer rollers are prone to frost. At present, a mold temperature controller is usually used to heat deionized water to prevent transfer rollers from frosting. However, the water circulation heating may cause a wide gap of temperature between the two ends of a roller, resulting in poor property uniformity, as well as poor appearance and properties of membrane.

In order to solve the problems of poor safety, environmental protection and chemical stability in the currently used dichloromethane and tetrachloroethylene as white oil extractants, there is a need to develop an extractant having a reasonable and scientific formula, which is safe, friendly to environment and highly stable.

### SUMMARY

One object of the present application is to provide an extractant for ultra-high molecular weight PE fibers and membranes, which has the advantages of safety, friendly-to-environment properties, high stability and good extraction effect.

Another object of the present application is to provide a method of preparing an extractant for ultra-high molecular weight PE fibers and membranes, which is simple and has low requirements for apparatuses.

Another object of the present application is to provide a method of applying an extractant for ultra-high molecular weight PE fibers and membranes, which is simple and easily operable.

For solving the above-mentioned technical problems, the present application adopts the following technical solutions:
In one aspect, provided herein is an extractant for ultra-high molecular weight PE fibers and membranes, comprising an ionic liquid, which is one or more of an imidazolium tetrafluoroborate salt, a betaine salt, an imidazolium acetate salt, an imidazolium dicyanamide salt, an imidazolium ethyl sulfate salt, an imidazolium bis(fluorosulfonyl)imide salt and a bis((trifluoromethyl)sulfonyl)imide salt.
In another aspect, provided herein is a method of preparing an extractant for ultra-high molecular weight PE fibers and membranes, comprising
   adding an imidazolium tetrafluoroborate salt, an imidazolium bis(fluorosulfonyl)imide salt, an imidazolium ethyl sulfate salt and a betaine salt to a reactor in order, elevating the temperature to 40-45 °C, after agitation for 1-2 h adding an imidazolium acetate salt, an alcohol-ether mixture, an imidazolium dicyanamide salt, and a bis((trifluoromethyl)sulfonyl)imide salt, elevating the temperature to 50-60 °C with agitation for 30-40 min, to afford a mixture; and filtering the mixture, wherein the filtrate is an extractant product.
In yet another aspect, provided herein is a method of applying an extractant for ultra-high molecular weight PE fibers and membranes, comprising
   immersing an ultra-high molecular weight PE fiber or membrane in an extractant; setting the extraction temperature at 30-60 °C and the extraction time in a range of 10-30 min; when the oil content in the extractant reaches 10-20%, making the upper liquid overflow and standing the mixture; and thereafter separating the extract and white oil for recycle use.

Compared with the prior art, the embodiments of the present application at least have the following advantages or beneficial effects:
1. The present application uses an ionic liquid as the leading ingredient of an extractant, and has the advantages of safety, friendly-to-environment properties, high flashing point, etc.
2. The present application formulates an ionic liquid having a particular HLB value specifically using one or more of an imidazolium tetrafluoroborate salt, a betaine salt, an imidazolium acetate salt, an imidazolium dicyanamide salt, an imidazolium ethyl sulfate salt, an imidazolium bis(fluorosulfonyl)imide salt and a bis((trifluoromethyl)sulfonyl)imide salt as raw materials, to form a composite solubilization system, which is in a uniform and stable state. Moreover, the present application solves the problem of low solubility of white oil in the ionic liquid by combining with the HLB value of white oil, enhances the solubility of white oil, and then extracts white oil from polyethylene fibers or membranes. After extraction, when white oil in the ionic liquid reaches a certain content, the mixture system has a change in the HLB value, and is demulsified and stratified followed by separation, so that both white oil and the extractant can be recycled.
3. The present application is characterized by common raw materials, easy preparation, simple use steps, lower requirements for apparatuses, and high operability, and is suitable for industrial production.

### BRIEF DESCRIPTION OF DRAWINGS

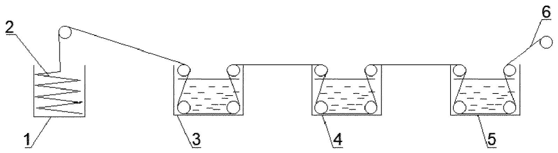

To illustrate the technical solutions of the embodiments of the present application more clearly, the accompanying drawing required in the embodiments will be briefly described below. It should be understood that the following drawing only shows some embodiments of the present application, and hence should not be regarded as limiting the scope. For persons of ordinary skill in the art, other related drawings may also be obtained according to this drawing without inventive work.

The figure is a schematic diagram of extraction of white oil from gel-fibers by the extractant of Example 5;

In the drawings: 1 - filament storage drum; 2 - unextracted gel-fiber; 3 - primary extraction tank; 4 - secondary extraction tank; 5 - tertiary extraction tank; 12 - extracted gel-fiber.

### DETAILED DESCRIPTION OF THE EMBODIMENTS

In order to make the objects, technical solutions and advantages of the embodiments of the present application clearer, the technical solutions in the embodiments of the present application will be clearly and completely described below. In the case that no specific condition is specified, the embodiments shall be carried out according to conventional conditions or conditions suggested by manufacturers. Agents or apparatuses used herein are all commercially available conventional products with no manufacturer specified.

It should be noted that the embodiments and features thereof in the present application may be in combinations unless incurring conflicts. The present application will be described in detail below with reference to specific embodiments.

An extractant for ultra-high molecular weight PE fibers and membranes comprises an ionic liquid, which is one or more of an imidazolium tetrafluoroborate salt, a betaine salt, an imidazolium acetate salt, an imidazolium dicyanamide salt, an imidazolium ethyl sulfate salt, an imidazolium bis(fluorosulfonyl)imide salt and a bis((trifluoromethyl)sulfonyl)imide salt.

For the present invention, the choices of raw materials and contents thereof in the solubilization system are particularly important. Any improper choice of raw materials and contents thereof in the solubilization system may result in turbidity, stratification and poor white oil solubility of the product.

In some embodiments of the present application, the constituent materials of the above-mentioned extractant also include an alcohol-ether mixture.

In some embodiments of the present application, the above-mentioned extractant consists of the following raw materials (by weight): 7-14 parts of an imidazolium tetrafluoroborate salt, 10-18 parts of a betaine salt, 22-30 parts of an imidazolium acetate salt, 13-20 parts of an imidazolium dicyanamide salt, 4-20 parts of an imidazolium ethyl sulfate salt, 4-8 parts of an imidazolium bis(fluorosulfonyl)imide salt, 3-8 parts of a bis((trifluoromethyl)sulfonyl)imide salt and 2-90 parts of an alcohol-ether mixture.

In some embodiments of the present application, the above-mentioned imidazolium tetrafluoroborate salt is one of 1-ethyl-3-methylimidazolium tetrafluoroborate and 1-butyl-3-methylimidazolium tetrafluoroborate, or a complex thereof; the above-mentioned imidazolium acetate salt is one of 1-ethyl-3-methylimidazolium acetate and 1-butyl-3-methylimidazolium acetate, or a complex thereof.

In some embodiments of the present application, the above-mentioned betaine salt is one of betaine malate and betaine tartrate, or a complex thereof.

In some embodiments of the present application, the above-mentioned imidazolium dicyanamide salt is one of 1-ethyl-3-imidazolium dicyanamide and 1-butyl-3-methylimidazolium dicyanamide, or a complex thereof; the above-mentioned imidazolium ethyl sulfate salt is one of 1-ethyl-3-methylimidazolium ethyl sulfate and 1-butyl-3-methylimidazolium ethyl sulfate, or a complex thereof; the aforesaid bis(fluorosulfonyl)imide salt is one of 1-ethyl-3-methylimidazolium bis(fluorosulfonyl)imide and 1-butyl-3-methylimidazolium bis(fluorosulfonyl)imide, or a complex thereof.

In some embodiments of the present application, the above-mentioned bis((trifluoromethyl)sulfonyl)imide salt is selected from the group consisting of 1-ethyl-3-methylimidazolium bis((trifluoromethyl)sulfonyl)imide, 1-butyl-3-methylimidazolium bis((trifluoromethyl)sulfonyl)imide, tributylmethylammonium bis((trifluoromethyl)sulfonyl)imide, and complexes thereof.

In some embodiments of the present application, the above-mentioned alcohol-ether mixture is a complex of at least two selected from the group consisting of tripropylene glycol methyl ether, ethylene glycol butyl ether, diethylene glycol butyl ether, dipropylene glycol propyl ether, propylene glycol butyl ether, ethylene glycol phenyl ether, and propylene glycol phenyl ether.

A method of preparing an extractant for ultra-high molecular weight PE fibers and membranes comprises
weighing each raw material in proportion for subsequent use;
adding an imidazole tetrafluoroborate salt, an imidazole bis(fluorosulfonyl)imide salt, an imidazole ethyl sulfate salt and a betaine salt to a reactor in order, elevating the temperature to 40-45 °C, after agitation for 1-2 h adding an imidazole acetate salt, an alcohol-ether mixture, an imidazole dicyanamide salt, and a bis((trifluoromethyl)sulfonyl)imide salt, elevating the temperature to 50-60 °C and agitating for 30-40 min, to afford a mixture; and
filtering the mixture, wherein the filtrate is an extractant product.

A method of applying an extractant for ultra-high molecular weight PE fibers and membranes comprises
immersing an ultra-high molecular weight PE fiber or membrane in an extractant; setting the extraction temperature at 30-60 °C and the extraction time in a range of 10-30 min; when the oil content in the extractant reaches 10-20%, making the upper liquid overflow and standing the mixture; and thereafter separating the extract and white oil for recycle use.

In some embodiments of the present application, the bath ratio of the above extraction is 1 :(30-90).

The features and performance of the present application will be further described in detail below with reference to the examples.

### Example 1

A process of preparing an extractant for ultra-high molecular weight PE fibers and membranes is as follows:
100 kg Imidazolium dicyanamide salts (50 kg 1-ethyl-3-imidazolium dicyanamide and 50 kg 1-butyl-3-methylimidazolium dicyanamide) were weighed and added to a reactor, the temperature was elevated to 50 °C, and the mixture was agitated for 40 min to afford an extractant of this example.

### Example 2

A process of preparing an extractant for ultra-high molecular weight PE fibers and membranes is as follows:
20 kg A betaine salt (betaine malate), 30 kg bis((trifluoromethyl)sulfonyl)imide salts (10 kg 1-ethyl-3-methylimidazolium bis((trifluoromethyl)sulfonyl)imide, 10 kg 1-butyl-3-methylimidazolium bis((trifluoromethyl)sulfonyl)imide and 10 kg tributylmethylammonium bis((trifluoromethyl)sulfonyl)imide), and 20 kg an alcohol-ether mixture (10 kg tripropylene glycol methyl ether and 10 kg ethylene glycol butyl ether) were weighed.

The betaine salt was added to a reactor, the temperature was elevated to 42 °C, then the alcohol-ether mixture and the bis((trifluoromethyl)sulfonyl)imide salts were added, and the temperature was elevated to 55 °C with agitation for 40 min, to afford an extractant of this example.

### Example 3

A process of preparing an extractant for ultra-high molecular weight PE fibers and membranes is as follows:
The following raw materials were weighed for subsequent use: 7 kg an imidazolium tetrafluoroborate salt (1-ethyl-3-methylimidazolium tetrafluoroborate), 18 kg a betaine salt (betaine malate), 30 kg an imidazolium acetate salt (1-ethyl-3-methylimidazolium acetate), 20 kg an imidazolium dicyanamide salt (1-ethyl-3-imidazolium dicyanamide), 4 kg an imidazolium ethyl sulfate salt (1-ethyl-3-methylimidazolium ethyl sulfate), 8 kg an imidazolium bis(fluorosulfonyl)imide salt (1-ethyl-3-methylimidazolium bis(fluorosulfonyl)imide, 8 kg a bis((trifluoromethyl)sulfonyl)imide salt (1-butyl-3-methylimidazolium bis((trifluoromethyl)sulfonyl)imide) and 5 kg an alcohol-ether mixture (3 kg tripropylene glycol methyl ether and 2 kg ethylene glycol phenyl ether).

The imidazolium tetrafluoroborate salt, the imidazolium bis(fluorosulfonyl)imide salt, the imidazolium ethyl sulfate salt and the betaine salt were added to a reactor in order; the temperature was elevated to 40 °C; after agitation for 2 h, the imidazolium acetate salt, the alcohol-ether mixture, the imidazolium dicyanamide salt, and the bis((trifluoromethyl)sulfonyl)imide salt were added; the temperature was elevated to 50 °C; and agitation was performed for 35 min to afford a mixture.

The mixture was filtered, wherein the filtrate is an extractant of this example for ultra-high molecular weight PE fibers and membranes.

### Example 4

A process of preparing an extractant for ultra-high molecular weight PE fibers and membranes is as follows:
The following raw materials were weighed for subsequent use: 14 kg an imidazolium tetrafluoroborate salt (1-butyl-3-methylimidazolium tetrafluoroborate), 10 kg a betaine salt (betaine tartrate), 30 kg an imidazolium acetate salt (1-butyl-3-methylimidazolium acetate), 18 kg an imidazolium dicyanamide salt (1-ethyl-3-imidazolium dicyanamide), 9 kg an imidazolium ethyl sulfate salt (1-ethyl-3-methylimidazolium ethyl sulfate), 7 kg an imidazolium bis(fluorosulfonyl)imide salt (1-butyl-3-methylimidazolium bis(fluorosulfonyl)imide), 7 kg a bis((trifluoromethyl)sulfonyl)imide salt (1-ethyl-3-methylimidazolium bis((trifluoromethyl)sulfonyl)imide) and 5 kg an alcohol-ether mixture (3 kg ethylene glycol butyl ether and 2 kg propylene glycol butyl ether).

The imidazolium tetrafluoroborate salt, the imidazolium bis(fluorosulfonyl)imide salt, the imidazolium ethyl sulfate salt and the betaine salt were added to a reactor in order; the temperature was elevated to 45 °C; after agitation for 2 h, the imidazolium acetate salt, the alcohol-ether mixture, the imidazolium dicyanamide salt, and the bis((trifluoromethyl)sulfonyl)imide salt were added; the temperature was elevated to 50 °C; and agitation was performed for 40 min to afford a mixture.

The mixture was filtered, wherein the filtrate is an extractant of this example for ultra-high molecular weight PE fibers and membranes.

### Example 5

A process of preparing an extractant for ultra-high molecular weight PE fibers and membranes is as follows:
The following raw materials were weighed for subsequent use: 14 kg an imidazolium tetrafluoroborate salt (1-butyl-3-methylimidazolium tetrafluoroborate), 18 kg betaine salts (10 kg betaine tartrate and 8 kg betaine malate), 22 kg an imidazolium acetate salt (1-butyl-3-methylimidazolium acetate), 20 kg an imidazolium dicyanamide salt (1-butyl-3-imidazolium dicyanamide), 9 kg an imidazolium ethyl sulfate salt (1-ethyl-3-methylimidazolium ethyl sulfate), 4 kg an imidazolium bis(fluorosulfonyl)imide salt (1-ethyl-3-methylimidazolium bis(fluorosulfonyl)imide), 8 kg a bis((trifluoromethyl)sulfonyl)imide salt (1-ethyl-3-methylimidazolium bis((trifluoromethyl)sulfonyl)imide) and 5 kg an alcohol-ether mixture (1 kg ethylene glycol butyl ether, 2 kg dipropylene glycol propyl ether and 2 kg propylene glycol phenyl ether).

The imidazolium tetrafluoroborate salt, the imidazolium bis(fluorosulfonyl)imide salt, the imidazolium ethyl sulfate salt and the betaine salt were added to a reactor in order; the temperature was elevated to 45 °C; after agitation for 1 h, the imidazolium acetate salt, the alcohol-ether mixture, the imidazolium dicyanamide salt, and the bis((trifluoromethyl)sulfonyl)imide salt were added; the temperature was elevated to 55 °C; and agitation was performed for 35 min to afford a mixture.

The mixture was filtered, wherein the filtrate is an extractant of this example for ultra-high molecular weight PE fibers and membranes.

The extractant prepared in this example is applied in the solvent extraction process for PE gel-fibers. The extraction process and devices are shown in the figure. Three extraction tanks (primary extraction tank 3, secondary extraction tank 4 and tertiary extraction tank 5) are arranged in sequence. The extraction tanks are filled with the extractant prepared in this example, and each extraction tank is equipped with rollers. The front end of the primary extraction tank 4 is provided with a filament storage drum 1, which is filled with unextracted gel-fiber 2.

The specific steps are passing the unextracted gel-fiber 2 through the primary extraction tank 3, the secondary extraction tank 4 and the tertiary extraction tank 5 sequentially via rollers. The entire process may be slowly performed in a continuous or intermittent manner. After the unextracted gel-fiber 2 fully is infiltrated and reacts with the extractant in the three extraction tanks, the extracted gel-fiber 12 is obtained.

Throughout the extraction process, the temperature of the extractant is maintained at 40 °C, and the total extraction time of each section of gel-fibers in the extractant is 20 min.

The oil content of the extractant in the extraction tanks is measured at any time. When the oil content reaches 15%, the extractant is collected by overflow and sent to a liquid separation tank for standing. Stratification may be seen after standing for 20 min, and hence white oil and the extractant are separated. After liquid separation, white oil re-swells the PE powder to make gel-fibers. The extractant is pumped into the extraction tanks for recycle.

The oil content of the gel-fibers after the extraction process of this example may be controlled within 0.3%, so as to realize the extraction and separation of the solvent in the gel-fibers.

### Example 6

A process of preparing an extractant for ultra-high molecular weight PE fibers and membranes is as follows:
The following raw materials were weighed for subsequent use: 14 kg an imidazolium tetrafluoroborate salt (1-butyl-3-methylimidazolium tetrafluoroborate), 18 kg betaine salts (8 kg betaine tartrate and 10 kg betaine malate), 30 kg an imidazolium acetate salt (1-ethyl-3-methylimidazolium acetate), 13 kg an imidazolium dicyanamide salt (1-butyl-3-imidazolium dicyanamide), 9 kg an imidazolium ethyl sulfate salt (1-ethyl-3-methylimidazolium ethyl sulfate), 8 kg an imidazolium bis(fluorosulfonyl)imide salt (1-ethyl-3-methylimidazolium bis(fluorosulfonyl)imide), 3 kg a bis((trifluoromethyl)sulfonyl)imide salt (tributylmethylammonium bis((trifluoromethyl)sulfonyl)imide) and 5 kg an alcohol-ether mixture (2 kg propylene glycol butyl ether, 1 kg dipropylene glycol propyl ether and 2 kg tripropylene glycol methyl ether).

The imidazolium tetrafluoroborate salt, the imidazolium bis(fluorosulfonyl)imide salt, the imidazolium ethyl sulfate salt and the betaine salt were added to a reactor in order; the temperature was elevated to 40 °C; after agitation for 2 h, the imidazolium acetate salt, the alcohol-ether mixture, the imidazolium dicyanamide salt, and the bis((trifluoromethyl)sulfonyl)imide salt were added; the temperature was elevated to 55 °C; and agitation was performed for 35 min to afford a mixture.

The mixture was filtered, wherein the filtrate is an extractant of this example for ultra-high molecular weight PE fibers and membranes.

The extractant prepared in this example is applied in the solvent extraction process for PE membranes. The specific steps include placing PE membranes in the extractant, wherein the bath ratio is 1:60, and the extraction temperature is 60 °C. The oil content of the extractant in the extraction tanks is measured at any time. When the oil content reaches 20%, the extractant is collected by overflow and sent to a liquid separation tank for standing. Stratification may be seen after standing for 40 min, and hence white oil and the extractant are separated. After liquid separation, white oil re-swells the PE powder to make PE membranes. The extractant is pumped into the extraction tanks for recycle.

The oil content of the PE membranes after the extraction process of this example may be controlled within 0.3%, so as to realize the extraction and separation of the solvent in the PE membranes.

### Example 7

A process of preparing an extractant for ultra-high molecular weight PE fibers and membranes is as follows:
The following raw materials were weighed for subsequent use: 14 kg imidazolium tetrafluoroborate salts (10 kg 1-ethyl-3-methylimidazolium tetrafluoroborate and 4 kg 1-butyl-3-methylimidazolium tetrafluoroborate), 18 kg a betaine salt (betaine malate), 30 kg an imidazolium acetate salt (1-ethyl-3-methylimidazolium acetate), 18 kg an imidazolium dicyanamide salt (1-butyl-3-imidazolium dicyanamide), 8 kg an imidazolium ethyl sulfate salt (1-ethyl-3-methylimidazolium ethyl sulfate), 5 kg an imidazolium bis(fluorosulfonyl)imide salt (1-ethyl-3-methylimidazolium bis(fluorosulfonyl)imide), 5 kg a bis((trifluoromethyl)sulfonyl)imide salt (tributylmethylammonium bis((trifluoromethyl)sulfonyl)imide) and 2 kg an alcohol-ether mixture (1 kg propylene glycol butyl ether and 1 kg tripropylene glycol methyl ether).

The imidazolium tetrafluoroborate salt, the imidazolium bis(fluorosulfonyl)imide salt, the imidazolium ethyl sulfate salt and the betaine salt were added to a reactor in order; the temperature was elevated to 45 °C; after agitation for 2 h, the imidazolium acetate salt, the alcohol-ether mixture, the imidazolium dicyanamide salt, and the bis((trifluoromethyl)sulfonyl)imide salt were added; the temperature was elevated to 58 °C; and agitation was performed for 40 min to afford a mixture.

The mixture was filtered, wherein the filtrate is an extractant of this example for ultra-high molecular weight PE fibers and membranes.

The extractant prepared in this example is applied in the solvent extraction process for PE gel-fibers. The specific steps are substantially the same as in Example 5, except that there are four extraction tanks in this example. Throughout the extraction process, the temperature of the extractant is maintained at 45 °C, and the total extraction time of each section of gel-fibers in the extractant is 25 min.

The oil content of the extractant in the extraction tanks is measured at any time. When the oil content reaches 10%, the extractant is collected by overflow and sent to a liquid separation tank for standing. Stratification may be seen after standing for 35 min, and hence white oil and the extractant are separated. After liquid separation, white oil re-swells the PE powder to make gel-fibers. The extractant is pumped into the extraction tanks for recycle.

The oil content of the gel-fibers after the extraction process of this example may be controlled within 0.3%, so as to realize the extraction and separation of the solvent in the gel-fibers.

In summary, the extractant for ultra-high molecular weight PE fibers and membranes and methods of preparing and applying the same in the examples of the present application have the following advantages:
1. The present application uses an ionic liquid as the leading ingredient of an extractant, and has the advantages of safety, friendly-to-environment properties, high flashing point, etc.
2. The present application formulates an ionic liquid having a particular HLB value specifically using one or more of an imidazolium tetrafluoroborate salt, a betaine salt, an imidazolium acetate salt, an imidazolium dicyanamide salt, an imidazolium ethyl sulfate salt, an imidazolium bis(fluorosulfonyl)imide salt and a bis((trifluoromethyl)sulfonyl)imide salt as raw materials, to form a composite solubilization system, which is in a uniform and stable state. Moreover, the present application solves the problem of low solubility of white oil in the ionic liquid by combining with the HLB value of white oil, enhances the solubility of white oil, and then extracts white oil from polyethylene fibers or membranes. After extraction, when white oil in the ionic liquid reaches a certain content, the mixture system has a change in the HLB value, and is demulsified and stratified followed by separation, so that both white oil and the extractant can be recycled.
3. The present application is characterized by common raw materials, easy preparation, simple use steps, lower requirements for apparatuses, and high operability, and is suitable for industrial production.

The examples described above are a part rather than all of the examples of the present invention. The detailed description of the examples of the present application is not intended to limit the claimed scope of the present application, but merely indicates selected examples of the present application. All other examples obtained by persons of ordinary skill in the art based on the examples of the present invention without inventive efforts shall fall within the protection scope of the present invention.

## Claims

1. An extractant for ultra-high molecular weight PE fibers and membranes, comprising an ionic liquid, which is one or more of an imidazolium tetrafluoroborate salt, a betaine salt, an imidazolium acetate salt, an imidazolium dicyanamide salt, an imidazolium ethyl sulfate salt, an imidazolium bis(fluorosulfonyl)imide salt and a bis(trifluoromethylsulfonyl)imide salt.

2. The extractant for ultra-high molecular weight PE fibers and membranes according to claim 1, **characterized in that** the constituent materials of said extractant further include an alcohol-ether mixture.

3. The extractant for ultra-high molecular weight PE fibers and membranes according to claim 2, **characterized in that** said extractant consists of the following raw materials (by weight): 7-14 parts of an imidazolium tetrafluoroborate salt, 10-18 parts of a betaine salt, 22-30 parts of an imidazolium acetate salt, 13-20 parts of an imidazolium dicyanamide salt, 4-20 parts of an imidazolium ethyl sulfate salt, 4-8 parts of an imidazolium bis(fluorosulfonyl)imide salt, 3-8 parts of a bis(trifluoromethylsulfonyl)imide salt and 2-90 parts of an alcohol-ether mixture.

4. The extractant for ultra-high molecular weight PE fibers and membranes according to any of claims 1-3, **characterized in that** said imidazolium tetrafluoroborate salt is one of 1-ethyl-3-methylimidazolium tetrafluoroborate and 1-butyl-3-methylimidazolium tetrafluoroborate, or a complex thereof; and said imidazolium acetate salt is one of 1-ethyl-3-methylimidazolium acetate and 1-butyl-3-methylimidazolium acetate, or a complex thereof.

5. The extractant for ultra-high molecular weight PE fibers and membranes according to any of claims 1-3, **characterized in that** said betaine salt is one of betaine malate and betaine tartrate, or a complex thereof.

6. The extractant for ultra-high molecular weight PE fibers and membranes according to any of claims 1-3, **characterized in that** said imidazolium dicyanamide salt is one of 1-ethyl-3-imidazolium dicyanamide and 1-butyl-3-methylimidazolium dicyanamide, or a complex thereof; said imidazolium ethyl sulfate salt is one of 1-ethyl-3-methylimidazolium ethyl sulfate and 1-butyl-3-methylimidazolium ethyl sulfate, or a complex thereof; and said imidazolium bis(fluorosulfonyl)imide salt is one of 1-ethyl-3-methylimidazolium bis(fluorosulfonyl)imide and 1-butyl-3-methylimidazolium bis(fluorosulfonyl)imide, or a complex thereof.

7. The extractant for ultra-high molecular weight PE fibers and membranes according to any of claims 1-3, **characterized in that** said bis(trifluoromethylsulfonyl)imide salt is selected from the group consisting of 1-ethyl-3-methylimidazolium bis(trifluoromethylsulfonyl)imide, 1-butyl-3-methylimidazolium bis(trifluoromethylsulfonyl)imide), tributylmethylammonium bis(trifluoromethylsulfonyl)imide, and complexes thereof.

8. The extractant for ultra-high molecular weight PE fibers and membranes according to claim 2 or 3, **characterized in that** said alcohol-ether mixture is a complex of at least two selected from the group consisting of tripropylene glycol methyl ether, ethylene glycol butyl ether, diethylene glycol butyl ether, dipropylene glycol propyl ether, propylene glycol butyl ether, ethylene glycol phenyl ether, and propylene glycol phenyl ether.

9. A method of preparing an extractant for ultra-high molecular weight PE fibers and membranes according to any of claims 3-8, comprising
weighing each raw material in proportion for subsequent use;
adding an imidazole tetrafluoroborate salt, an imidazole bis(fluorosulfonyl)imide salt, an imidazole ethyl sulfate salt and a betaine salt to a reactor in order, elevating the temperature to 40-45 °C, after agitation for 1-2 h adding an imidazole acetate salt, an alcohol-ether mixture, an imidazole dicyanamide salt, and a bis(trifluoromethylsulfonyl)imide salt, elevating the temperature to 50-60 °C and agitating for 30-40 min, to afford a mixture; and
filtering the mixture, wherein the filtrate is an extractant for ultra-high molecular weight PE fibers and membranes.

10. A method of applying an extractant for ultra-high molecular weight PE fibers and membranes according to any of claims 1-9, comprising
immersing an ultra-high molecular weight PE fiber or membrane in an extractant; setting the extraction temperature at 30-60 °C and the extraction time in a range of 10-30 min; when the oil content in the extractant reaches 10-20%, making the upper liquid overflow and standing the mixture; and thereafter separating the extract and white oil for recycle use.
